# EUROPEAN PATENT APPLICATION

(11) **EP 4 254 228 A1**
(43) Date of publication of application: **04.10.2023**
(21) Application number: 22305387.7
(22) Date of filing: 28.03.2022
(51) Int. Cl.: G06F 21/31, G06F 21/55, H04L 9/40, G06Q 20/40

(54) **A TRAINING METHOD FOR TRAINING AN ASSEMBLING MODEL TO DETECT A CONDITION**

(71) Applicant: Thales Dis France SAS, 92190 Meudon (FR)
(72) Inventor: MIQUEL PUYOL, Xavier, 91700 Ste Geneviève des Bois (FR); ARNOLD, Frank, 94370 Sucy-en-Brie (FR)
(74) Representative: Quintero Romero, Manuel

(57) **Abstract**

The invention relates to a training method (1) for training a model (M1) to detect a condition (C), wherein said model (M1) is an assembling model that is composed of at least one primary model (M1.1) and of a secondary model (M1.2), said training method (1) comprising:
-training the primary model (M1.1) with a primary training dataset (D1) based on a dataset of data (IN1) partitioned by a key value (k), said primary training dataset (D1) comprising input values (i1) so that it outputs a primary score (SI1) for each data (Ui) within the partitioned dataset of data (IN1),
-training the secondary model (M1.2) with a secondary training dataset (D2) based on a dataset of data (IN1), said secondary training dataset (D2) comprising at least one feature (vf) representing the variability of said input values (i1) within a time window (t1) so that it outputs a secondary score (Sg1) for each data (Ui) within the dataset of data (IN1),
- computing an aggregation function (f(Ux)) by combining said primary weights (WI) with the primary scores (SI1) and said secondary weights (Wg) with the secondary scores (Sg1) so that it outputs a register score (Sr1) that is a prediction of said condition (C),
- tuning the assembling model (M1) with said aggregation function (f(Ux)) based on adjusted primary weights (WI) and on adjusted secondary weights (Wg) until the register score (Sr1) is below a primary threshold (th1).

## Description

### FIELD OF THE INVENTION

The present invention relates to a training method for training a model to detect a condition. It also relates to a detection method for detecting a condition using said trained model. Such a training method may be used in a non-limitative example for any secure system which needs a user authentication.

### BACKGROUND OF THE INVENTION

During an authentication of users on a secure system, there is a need to analyze the behavior of the users in order to see if there is an abnormal behavior among a user and to deny the access to the secure system if it is the case.

To do so, a training method for training a model to detect a condition where the condition is an abnormal behavior of a user comprises the step of training a model with a dataset comprising a journal of authentication sessions of all the users that enter the secure system.

Once the model is trained, it can be used to analyze the behavior of a particular user to see if it is in line with the other users. If an abnormal behavior is detected, the access to the secure system can be denied to said particular user.

One problem of this prior art is that a user can have a specific behavior that is not in line with the global population of the other users without said behavior being an anomaly. Hence, although his behavior is authorized, the access to the secure system will be denied to said user when it is analyzed by the trained model of the prior art.

It is an object of the invention to provide a training method for training a model to detect a condition, which resolves the problem above-stated.

### SUMMARY OF THE INVENTION

To this end, it is provided a training method for training a model to detect a condition, wherein said model is an assembling model that is composed of at least one primary model and of a secondary model, said training method comprising:
- training the primary model with a primary training dataset based on a dataset of data partitioned by a key value, said primary training dataset comprising input values so that it outputs a primary score for each data within the partitioned dataset of data,
- training the secondary model with a secondary training dataset based on a dataset of data, said secondary training dataset comprising at least one feature representing the variability of said input values within a time window so that it outputs a secondary score for each data within the dataset of data,
- computing an aggregation function by combining said primary weights with the primary scores and said secondary weights with the secondary scores so that it outputs a register score that is a prediction of said condition,
- tuning the assembling model with said aggregation function based on adjusted primary weights and on adjusted secondary weights until the register score is below a primary threshold.

As we will see in further details, the at least one primary model allows to take into account the specific behavior of a user as such, whereas the secondary model allows to take into account the behavior of said user compared to a global behaviors of a plurality of users. Hence, the behavior of a particular user can be compared with the behaviors of all the other users, but taking also into account also its own usual behavior.

According to non-limitative embodiments of the invention, the training method in accordance with the invention further comprises the following characteristics.

In a non-limitative embodiment, said training method further comprises initializing said primary weights and said secondary weights according to a number of entries of said dataset of data.

In a non-limitative embodiment, said primary model and said secondary model are unsupervised models and wherein said at least primary model is a KDE model and said secondary model is an isolation forest model or a K-means model.

In a non-limitative embodiment, said condition is an abnormal behavior of a user within a secure system such as a network secure system or a building secure system.

In a non-limitative embodiment, the abnormal behavior relates to:
- an authentication of said user to enter said secure system, or
- activities of said user inside the secure system after authentication of said user.

In a non-limitative embodiment, said key value is selected within the following set of data:
- a country,
- a tenant,
- a service,
- a user.

In a non-limitative embodiment, the input values are selected within the following set of data:
- IP address of said user,
- geolocalisation of said IP address,
- authentication's day,
- authentication's day time,
- application aimed by the authentication,
- device used for the authentication.

In a non-limitative embodiment, said at least one feature is selected within the following set of data:
- the number of times an input value appears during said time window,
- the diversity of values for each input value during said time window.

In a non-limitative embodiment, said assembling model comprises a plurality of primary models, each of said primary model being trained with a primary training data set based on a dataset of data partitioned by key values that are different from one primary model to another one primary model.

In a non-limitative embodiment, said training method further comprises:
- registering in a database a mapping between the at least one trained primary model found and the corresponding key value.

In a non-limitative embodiment, the training of the primary model is performed periodically.

In a non-limitative embodiment, the primary weights and the secondary weights are defined according to the number of data within the dataset of data.

In a non-limitative embodiment, the supervised model is a random forest regression model.

In a non-limitative embodiment, the data within the dataset of data are authentications of user(s).

In a non-limitative embodiment, the training of the primary model lasts during a defined time frame. In non-limitative embodiments, the defined time frame is of one week, one month or three months.

In a non-limitative embodiment, the time window is of at least one week. In a non-limitative variant of embodiment, said time window is of one month. In another non-limitative variant of embodiment, said time window is of three months.

In a non-limitative embodiment, a combination of one feature is used for different input values.

In a non-limitative embodiment, the secondary training dataset comprises a plurality of features representing the variability of the input values. The number of times and the diversity of values may be used in combination.

In non-limitative embodiments, the training of the at least one primary model and of the secondary model are performed in series or in parallel and in any order whatsoever. In a non-limitative embodiment, at least one key value is predetermined before the execution of the detection method.

In a non-limitative embodiment, a plurality of key values is predetermined before the execution of the detection method.

In a non-limitative embodiment, the register stream of data comprises the authentications online related to the at least predetermined key value.

In a non-limitative embodiment, the activities are selected among the followings:
- a habit of consummation for sales sites,
- a habit of a way in internet pages,
- a habit of usage of a web site such as in a non-limitative examples sensitive data access, financial activities.

In addition, there is provided a detection method for detecting a condition using a model, wherein said model is an assembling model that is composed of at least one primary model and a secondary model, wherein said detection method comprising:
- identifying within a database at least one trained primary model related to at least one predetermined key value,
- applying a register stream of data as input to said at least one identified primary model so that it outputs a primary score for each data of said register stream of data,
- applying said register stream of data as input to the secondary model so that it outputs a secondary score for each data of said register stream of data,
- computing an aggregation function by combining primary weights with the primary score and secondary weights with the secondary score so that it outputs a register score that is a prediction of said condition.

The model is the model that has been trained according to any of the previous characteristics.

According to non-limitative embodiments of the invention, the detection method in accordance with the invention further comprises the following characteristics.

In a non-limitative embodiment, said detection method further comprises deducing that the condition is positive if the register score is above a secondary threshold.

In a non-limitative embodiment, said condition is an abnormal behavior of a user within a secure system.

In a non-limitative embodiment, the abnormal behavior relates to:
- an authentication of said user to enter said secure system, or
- activities inside the secure system after authentication of said user.

In a non-limitative embodiment, the aggregation function is a supervised model with labels being the primary scores and the secondary scores.

### BRIEF DESCRIPTION OF THE DRAWINGS

Some embodiments of methods and/or system in accordance with embodiments of the present invention are now described, by way of example only, and with reference to the accompanying drawings, in which:
- Figure 1 is a schematic diagram which illustrates a training method for training a model to detect a condition, according to a non-limitative embodiment of the invention,
- Figure 2 is a schematic diagram which illustrates the training method of figure 1, said training method further comprises an initialization step, according to a non-limitative embodiment,
- Figure 3 is a schematic diagram which illustrates a model that is trained by the training method of figure 1, said model being an assembling model that is composed of at least one primary model and of a secondary model, according to a non-limitative embodiment,
- Figure 4 is a schematic diagram which illustrates a model that is trained by the training method of figure 1, said model being an assembling model that is composed of a plurality of primary models and of a secondary model, according to a non-limitative embodiment,
- Figure 5 is a schematic diagram which illustrates a detection method for detecting a condition using said trained model of figures 3 or 4, according to a non-limitative embodiment of the invention,
- Figure 6 is a schematic diagram which illustrates the trained model of figure 3 and 4 when used by the detection method of figure 5, according to a non-limitative embodiment.

### DESCRIPTION OF EMBODIMENTS OF THE INVENTION

In the following description, well-known functions or constructions by the man skilled in the art are not described in detail since they would obscure the invention in unnecessary detail.

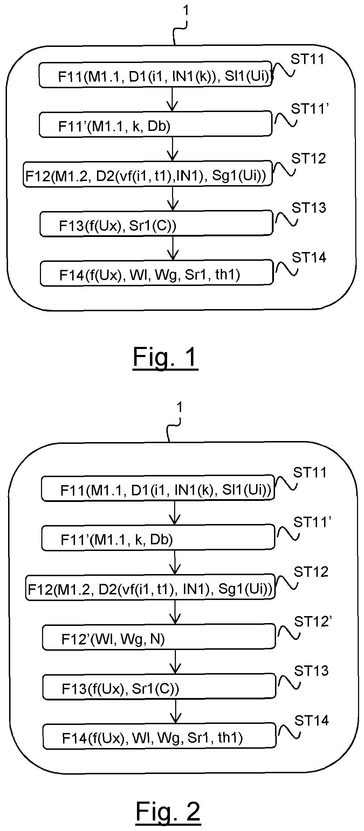

The present invention relates to a training method 1 for training a model M1 to detect a condition C, said training method 1 being described in reference to figures 1 to 4.

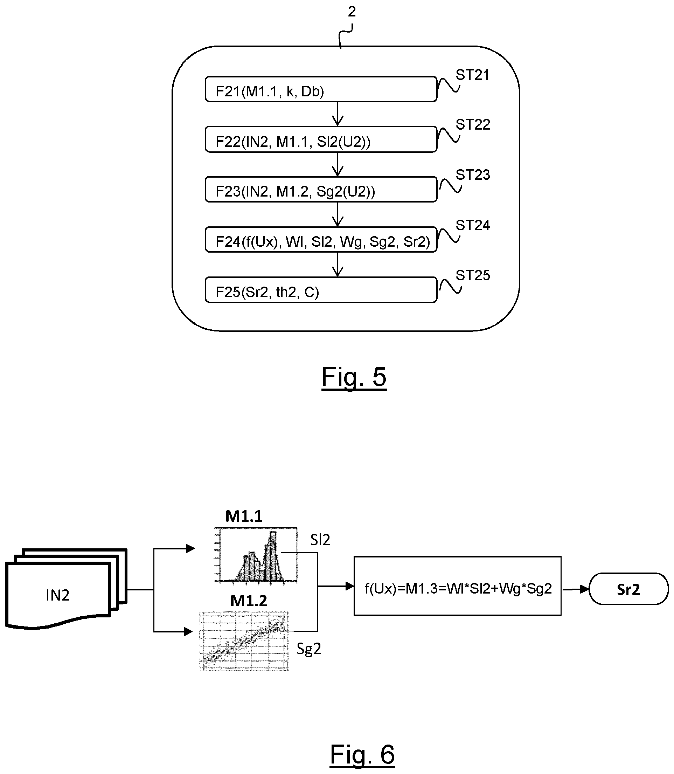

The present invention also relates to a detection method 2 for detecting a condition C using said training model M1, said detection method 2 being described in reference to figures 5 and 6.

In the following description, the terms authenticate, connect and login will be used indifferently.

The training method 1 is described as following.

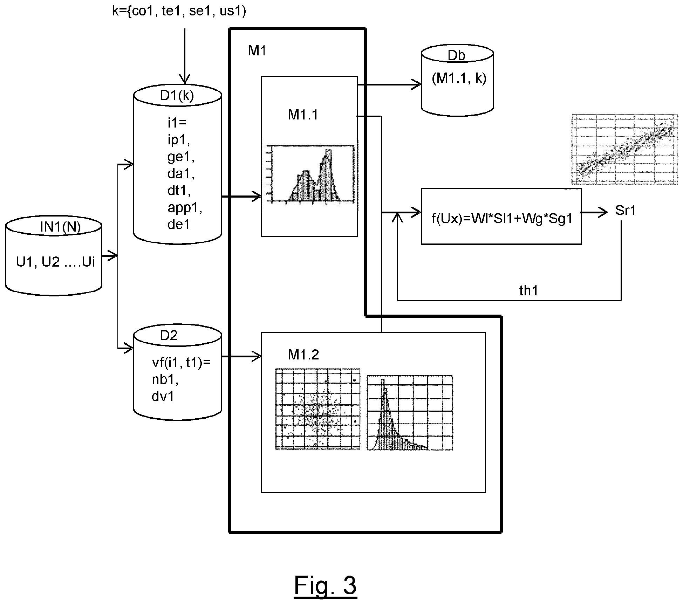

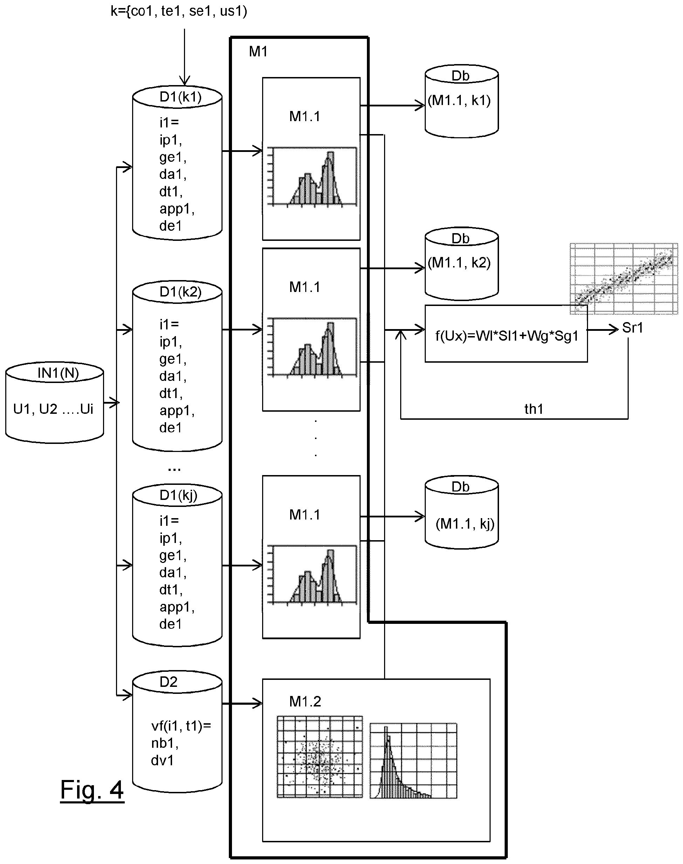

As illustrated in figure 3, the model M1 is an assembling model that is composed of at least one primary model M1.1 and of a secondary model M1.2. As illustrated in figure 4, in a non-limitative embodiment, the model M1 is an assembling model that is composed of a plurality of primary models M1.1 and of a secondary model M1.2. The primary model M1.1 is also called local model M1.1 in the following. The secondary model M1.2 is also called global model M1.2 in the following.

The primary model M1.1 uses as inputs input values i1. The secondary model M1.2 uses as inputs at least one feature vf representing the variability of said input values i1 during a time window t1. It is to be noted that the input values i1 can be seen as static values contrary to the at least one feature vf that is changeable.

As will be described in the following, in a first step, one creates partitions by a key value k. In the following a key value k is also called key k. The primary model M1.1 is trained for this particular key value k and the primary model M1.1 is stored into a database Db indexed by the key value k. In a second step, the secondary model M1.2 is trained by analyzing all the input values i1 during a time window t1.

In a non limitative embodiment, the at least one primary model M1.1 and the secondary model M1.2 are unsupervised models. It means that the training datasets used to train them comprise input values i1 that are not labeled. In a non-limitative embodiment, the primary model M1.1 is a KDE model. In a non-limitative embodiment, the secondary model M1.2 is an isolation forest model.

As described in the following, the primary model M1.1 is trained with a primary training dataset D1 and the secondary model M1.2 is trained with a secondary training dataset D2. The primary training dataset D1 is based on a dataset of data IN1 that is partitioned by a key value k. The secondary dataset D2 is based on the whole dataset of data IN1. In a non-limitative embodiment, the dataset of data IN1 comprises all the authentications (also called connections or logins) of all the users within a secure system S.

In a non limitative embodiment, the condition C is an abnormal behavior of a user Ux within a secure system S. In non-limitative embodiments, the secure system S is a network secure system or a building secure system. The network secure system is taken as a non-limitative example in the following. It is referred as network secure system S in the following.

In non-limitative embodiments, the abnormal behavior C relates to:
- an authentication of said user Ux to enter said secure system S, here the network secure system S, or
- activities of said user Ux inside the secure system S after authentication of said user Ux

In non-limitative embodiments, the activities are selected among the followings:
- a habit of consummation for sales sites,
- a habit of a way in internet pages,
- a habit of usage of a web site such as in a non-limitative examples sensitive data access, financial activities, etc.

The authentication of said user Ux to enter said network secure system S is taken as a non-limitative example in the following. When authenticating, the user Ux connects to the network secure system S with a login/password, also called login for simplification in the following. As will be described in the following, thanks to the training, one will be able to analyze the connection behavior of the user Ux during a login on the network secure system S.

The primary model M1.1 allows defining a profile of a user Ux after a few number of authentications (in a non-limitative example after five authentications), whereas the secondary model M1.2 allows defining a profile of a user Ux compared to a global population of users Ux after much more authentications during one time window t1 (in a non-limitative example after fifteen authentications). The global population of users Ux is also called global population in the following. Hence, the primary model M1.1 permits to track the activity of the user Ux and to look for his particular behavior as such, whereas the secondary model M1.2 permits to track the activity of a user Ux and to look for his behavior in comparison with the global population of users Ux.

In a non-limitative example, if there is no activity (i.e. no authentications) of the user Ux during the time window t1, with the secondary model M1.2 one cannot see if the user's behavior is abnormal or not. Whereas with the primary model M1.1, after a few number of authentications, one can use the primary model M1.1 to determine if the user's behavior is abnormal or not, as one can see rapidly if there is an anomaly with his behavior.

Depending on the cases:
- the secondary model M1.2 could show a normal behavior, whereas the primary model M1.1 could show an abnormal behavior, or
- the primary model M1.1 could show a normal behavior, whereas the secondary model M1.2 could show an abnormal behavior.

Hence, using only the secondary model M1.2, this can lead to a false positive detection, where a behavior is classified as abnormal although it is normal.

Hence, using only the primary model M1.1, this can lead to a false negative detection, where a behavior is classified as normal although it is abnormal.

The primary model M1.1 outputs primary scores SI1 also called local scores SI1, and the secondary model M1.2 outputs secondary scores Sg1, also called global scores Sg1.

The primary score SI1 is output for each data Ui within the dataset of data IN1 that has been partitioned by the key value k that is to say with the partitioned dataset of data IN1.

In non-limitative examples:
- when the dataset of data IN1 is partitioned with the key k that is a user us1, the data Ui are all the connections within the dataset of data IN1 that belong to this user,
- when the dataset of data IN1 is partitioned with the key k that is a service se1, the data Ui are all the connections within the dataset of data IN1 that belong to all the users of said service se1,
- when the dataset of data IN1 is partitioned with the key k that is a tenant te1, the data Ui are all the connections within the dataset of data IN1 that belong to all the users of said tenant te1,
- when the dataset of data IN1 is partitioned with the key k that is a country co1, the data Ui are all the connections within the dataset of data IN1 that belong to all the users of said country co1.

Hence, the partition of the dataset of data IN1 according to a key value k is equal to a subset of data of said dataset of data IN1 that is used to train the primary model M1.1.

The secondary score Sg1 is output for each data Ui within the whole dataset of data IN1.

With the only the global score Sg1 is used, when the behavior of a user Ux is too different from the global population of users Ux or when there are not enough authentications during the time window t1, an authentication of said user Ux will be classified always as abnormal although it could be normal. As will be described in the following, one uses the primary score SI1 to mitigate the result regarding the abnormality.

As illustrated in figures 1 and figure 2, the training method comprises the following steps.

In step ST11 illustrated F11(M1.1, D1(i1, IN1(k)), SI1(Ui)), the primary model M1.1 is trained with the primary training dataset D1 based on a dataset of data IN1 partitioned by a key value k so that it outputs a primary score SI1.

The primary training dataset D1 comprises input values i1 based on a subset of the dataset of data IN1, the subset being related to said key value k.

In a non-limitative embodiment, the dataset of data IN1 is a journal of sessions of the user Ux, also called the journal of logs or the journal of logins. Hence, there is a partition of the journal sessions of the user Ux according to the key k. It is to be noted that when a user Ux performs an authentication online, there is a registered of his logins in a database (not illustrated).

The data Ui (i=1 to N, N with integer) within said partitioned dataset of data IN1 are therefore the logs (also called connections or authentications or logins) of the user(s) Ux related to the key value k. In a non-limitative embodiment, the logs are unlabeled that is to say one can't tell if a log is normal or abnormal. In a non-limitative embodiment, the data Ui are registered in a database (not illustrated).

For the primary training dataset D1, one needs a minimum of data Ui, here a minimum of logs of the user(s) Ux. Even in a same day or in a same set of hours, it is sufficient. It is to be noted that if a user Ux doesn't connect again for a long time period, say one month, he is not a considered as a new user for the primary model M1.1, as there is an historic of said user Ux in a database.

As illustrated in figures 3 and 4, in non-limitative embodiments, the input values i1 are selected among the following data:
- IP address ip1 of a user Ux,
- geolocalisation ge1 of said IP address ip1,
- authentication's day da1,
- authentication's day time dt1,
- application app1 aimed by the authentication,
- device de1 used for the authentication.

In non-limitative embodiment, the primary training dataset D1 comprises one type of input values i1 or a combination of different types of input values i1.

Hence the input values i1 permit to collect different information related to a user Ux. Regarding the IP address app1 of a user Ux, if a user Ux usually connects with one or a plurality of IP addresses app1, it will be taken into account.

Regarding the IP address' geolocalisation ge1, if a user Ux is usually based in a specific location, it will be taken into account; or if a user Ux travels a lot and is based in different locations, it will be taken into account.

Regarding the authentication's day da1, if a user Ux usually connects between 9am until 6pm in a non-limitative example, it will be taken into account.

Regarding the application app1 aimed by the authentication, if the user Ux usually connects to a certain type of application(s), it will be taken into account.

Regarding the device de1, if a user Ux is attributed a certain type of machine (windows ^{®}, linux ^{®} in non-limitative examples) for the connection, it will be taken into account. The partitioned dataset of data IN1 permits to know the habits of a user Ux (if the key k is the user us1) or of a plurality of users (if the key k is a service se1, a tenant te1, a country co1). It is to be noted that for a new user Ux, one has to wait for a few authentications (in a non-limitative example five authentications) to collect some information in order to know his behavior.

As illustrated in figures 3 or 4, in non-limitative embodiments, the key value k is selected among the following data:
- a country co1,
- a tenant te1,
- a service se1,
- a user us1.

As mentioned before, the key k allows having a segregation of the authentication sessions.

Hence, in a non-limitative example, the authentication sessions are partitioned according to a group of users that is a country co1. Hence, in another non-limitative example, the authentication sessions are partitioned according to a group of users that is a tenant te1. In another non limitative example, the group of users is a branch company. Hence, in another non-limitative example, the authentication sessions are partitioned according to a group of users that is a service se1. In non-limitative examples, the service se1 is the research development service or the human resources service or the accounting service. Hence, in another non-limitative example, the authentication sessions are partitioned according to a user us1.

It is to be noted that when using the KDE model for the primary model M1.1, it identifies different behaviors for the same key k. Hence, it identifies if a combination of different input values i1 for a same key is normal or not. In a non-limitative example, if a user of an accounting service logins into ten applications in the same hour, it could lead to a primary score SI1 that is defined as abnormal. Therefore, a distribution value is computed and a probability to find a same combination of input values i1 in the history of a user Ux is given. If there is a low probability, then the primary score SI1 is defined as abnormal; if there is a high probability, the primary score SI1 is defined as normal. Hence, each login of each user Ux related to the key value k is therefore labeled as normal or abnormal, the label being the primary score SI1.

The KDE model determines itself the anomaly unlike the other unsupervised models that only output different classes. For these other unsupervised models, one has to perform a subsequent task of determining if the class is abnormal or not. Hence, one has to perform a subsequent task of labeling the classes found.

For the KDE model, in a non-limitative embodiment, the parameters are:
- a bandwidth that is estimated for each key k with a Nearest Neighbors algorithm,
- a kernel function K that is a Gaussian
- a metric that is an Euclidean.

It is to be noted that the data related to a user Ux changed continuously. Hence, in a non-limitative embodiment, the training of the primary model M1.1 is performed periodically. In a non-limitative embodiment, the training is launched each week. Moreover, in a non-limitative embodiment, the training of the primary model M1.1 lasts during a defined time frame. In non-limitative embodiments, the defined time frame is of one week, one month or three months.

Once the primary model M1.1 has been trained, the outcome of the training is a primary model M1.1 that can be used subsequently during a detection of a condition C. This primary model M1.1 is stored for future use.

Hence, in a non-limitative embodiment, in step ST11' illustrated F11'(M1.1, k, Db), a mapping between the at least one trained primary model M1.1 found and the corresponding key value k is registered in a database Db. The primary model M1.1 is stored into the database Db indexed by the key value k.

This mapping will serve when executing the detection method 2 described later in the description.

In a non-limitative embodiment illustrated in figure 4, the assembling model M1 comprises a plurality of primary models M1.1, each of said primary model M1.1 being trained with a primary training data set D1 based on a dataset of data IN1 partitioned by key values k that are different from one primary model M1.1 to another one primary model M1.1. Each key value k has associate a primary model M1.1. Hence, the primary training data sets D1 are different for each of the primary models M1.1. In this case, in the database Db, different primary models M1.1 are stored into the database Db indexed respectively by the different key values k. Hence, in the database Db one can have one of the primary models M1.1 or any combinations of the primary models M1.1 listed below:
- a first primary model M1.1 indexed by a key k that is a country co1, and/or
- a second primary model M1.1 indexed by a key k that is a tenant te1, and/or
- a third primary model M1.1 indexed by a key k that is a service se1, and/or
- a fourth primary model M1.1 indexed by a key I that is a user us1.

It is to be noted that the training steps ST11' is performed on the fly. Therefore, it is performed during the execution of the step ST11 and each time a primary model M1.1 has been trained.

In step ST12 illustrated F12(M1.2, D2(vf(i1, t1), IN1), Sg1(Ui)), the secondary model M1.2 is trained with a secondary training dataset D2 so that it outputs a secondary score Sg1.

The secondary training dataset D2 is based on the dataset of data IN1 and comprises at least one feature vf representing the variability of the input values i1 within a time window t1.

Contrary to the primary model M1.1, for the secondary model M1.2, all the data Ui of the dataset of data IN1 are taken into account. That means that for the non-limitative given example, all the authentications of all the users Ux within the network secure system S are taken into account when looking for at least one feature vf representing the variability of the input values i1.

As illustrated in figures 3 and 4, in non-limitative embodiments, said at least one feature vf is selected among the following data:
- the number of times nb1 an input value i1 appears during said time window t1,
- the diversity of values dv1 for each input value i1 during said time window t1.

In a non-limitative embodiment, said time window t1 is of at least one week. In a non-limitative variant of embodiment, said time window t1 is of one month. In another non-limitative variant of embodiment, said time window t1 is of three month.

For the secondary model M1.2 one needs a higher number of input values i1 (that is to say of logins of each user Ux) than for the primary model M1.1, so that said secondary model M1.2 with the feature(s) vf is able to detect the abnormality. It is to be noted that if a user Ux doesn't connect for a long time, say one month, i.e. during the time window t1, he is a new user for the secondary model M1.2 as there will be no information about this user Ux within the time window t1.

The secondary model M1.2 allows searching for an abnormality, also called anomaly, of the user's behavior when he authenticates to the network secure system S comparing to a global behavior of a global population of users Ux. In a non-limitative example, if the global population connects at 8am and the user Ux connects at 6am, the conclusion is that there is an anomaly.

Hence, for the first feature vf within a time window t1 of one month for example, in non limitative examples, one can look for:
- the number of times the same IP address ip1 appears during one month, and/or
- the number of times a user logins at a certain day time dt1 during one month, and/or
- the number of times a user logins at a certain day da1 during one month, and/or
- the number of times a user logins at a certain location ge1 during one month, and/or
- the number of times a user Ux logins to an application app1 during one month, and/or
- the number of times a user Ux logins using a same device de1 during one month. Hence, for the second feature vf within a time window t1 of one month for example, in non limitative examples, one can look for:
- how many times a user Ux logins using a different IP address ip1 during one month, and/or
- how many times a user Ux logins at different day times dt1 during one month, and/or
- how many times a user Ux logins at different days da1 during one month, and/or
- how many times a user Ux logins at different locations ge1 during one month, and/or
- how many times a user Ux logins to an application app1 during one month, and/or
- how many times a user Ux logins using a same device during one month.

In a non-limitative embodiment, a combination of one feature vf is used for different input values i1. Hence, in a non-limitative example, for the first feature vf, one can look for the number of times the same IP address ip1 appears during one month, and for the number of times a user Ux logins in to an application app1 during one month. Hence, in a non-limitative example, for the second feature vf, one can look for how many times a user Ux logins in at different day time dt1 during three months, and for how many times a user Ux logins in at different day times dt1 during three months.

In a non-limitative embodiment, the secondary training dataset D2 comprises a plurality of features vf representing the variability of the input values i1. Hence, the number of times nb1 and the diversity of values dv1 may be used in combination. The secondary score Sg1 is output for each data Ui within the dataset of data IN1. In the non-limitative given example, it means that for each logins of each user Ux that connects to the network secure system, a secondary score Sg1 is output.

It is to be noted that when using the isolation forest for the secondary model M1.2, it will class each login of a user Ux as normal or abnormal compared to the global population of users Ux. Hence the secondary score Sg1 is defined as normal or abnormal compared to this global population of users Ux. Each login of each user Ux is therefore labeled as normal or abnormal, the label being the secondary score Sg1. The advantages of the isolation forest model are:
- it is not influenced by the number of features vf,
- there are few parameters to set,
- it doesn't depend on any distance of density-based measures to identify anomalies unlike a dbscan model,
- it uses linear time complexity versus exponential in other models.

In a non-limitative embodiment, the parameters for the isolation forest are as following:
- a number of trees: 150,
- a contamination: 0.001,
- a maximum sample proportion:0.1,
- a maximum feature proportion: 1,
- a use of bootstrapping to sample the training data.

It is to be noted that the training steps ST11 and ST12 may be performed in series or in parallel and in any order whatsoever.

As illustrated in figures 1 and 2, in step ST13 illustrated F13(f(Ux), Sr1(C)), an aggregate function f(Ux) is computed so as to output a register score Sr1 that is a prediction of said condition C.

In the non-limitative given example, as the condition C is an abnormal behavior of a user Ux, the register score Sr1 is a prediction of said abnormal behavior.

The aggregation function f(Ux) is computed by combining primary weights WI with the primary scores SI1 and secondary weights Wg with the secondary scores Sg1.

The aggregation function f(Ux) permits to take into account the particular behavior of a user Ux. In a non-limitative example, if the global population connects at 8am and the user Ux connects at 6am, with the use of the aggregation function f(Ux), the conclusion is that there is no anomaly if the user Ux usually connects at 6am, although there should if one regards only the secondary scores Sg1. In another non-limitative example, if a user usually moves a lot around a country or different countries and connects from different locations, but the global population of users Ux connects only within a perimeter of 100 kilometers, the conclusion is that there is no anomaly, although there should if one regards only the secondary scores Sg1. Hence, the aggregation function f(Ux) permits to mitigate the result of the prediction by mixing both scores, the primary scores SI1 and the secondary scores Sg1.

As illustrated in figure 2, in step ST12' illustrated F12'(WI, Wg, N), in a non-limitative embodiment, the training method 1 further comprises a step of initializing said primary weights WI and said secondary weights Wg according to a number N of entries, that is to say the number of data Ui, within said dataset of data IN1.

It is to the noted that if there are few data Ui, the primary weights WI have a higher value than the one of the secondary weights Wg. It is to be noted that if there is no data Ui during the time window t1, in a non-limitative embodiment, the secondary weights Wg are initialized with the value 0.

As illustrated in figures 1 and 2, in step ST14 illustrated F14(f(Ux), WI, Wg, Sr1, th1), the assembling model M1 is tuned with said aggregation function f(Ux) based on adjusted primary weights WI and on adjusted secondary weights Wg until the register score Sr1 is below a primary threshold th1.

It is to be noted that the primary threshold th1 is initialized with an initialization value based on an empiric experience, and then is tuned according to the feedback of the training.

In a non-limitative embodiment, the primary weights WI and the secondary weights Wg are adjusted by an operator according to the feedback of the training.

Hence, thanks to the combination of the primary model M1.1 and of the secondary model M1.2, one can take into account an authentication's behavior of a user Ux within a network secure system S regarding the global behaviors of a global population of a plurality of users Ux, and regarding the particular behavior of the user Ux himself.

When the training of the assembling model M1 is finished, one can use said assembling model M1 that has been trained for detecting a condition C. In particular, one uses the at least one trained primary model M1.1 and the trained secondary model M1.2.

Hence, a detection method 2 for detecting a condition C using a model M1, wherein said model is an assembling model M1 that is composed of at least one primary model M1.1 and a secondary model M1.2 is described in reference to figure 5. The assembling model M1 when used by the detecting method 2 is illustrated in figure 6. In the non-limitative embodiment illustrated, the condition C is an abnormal behavior of a user Ux within a secure system S. In non-limitative embodiments, the secure system is a network secure system or a building secure system. In non-limitative embodiments, the abnormal behavior C relates to:
- an authentication of said user Ux to enter said secure system S, or
- activities inside the secure system S after authentication of said user Ux.

The authentication of a user Ux to enter a network secure system S is taken as a non-limitative example in the following.

The detection method 2 is executed for each authentication of a user Ux to enter the network secure system S, that is to say it is executed online (also referred as on the fly) each time a user Ux logins to the network secure system S.

Before the execution of the detection method 2, at least one key value k is chosen. In a non-limitative embodiment, an operator chooses the key value k. The at least one key value k is therefore predetermined beforehand; it is also called predetermined key value k.

In non-limitative examples, if the operator chooses:
- to evaluate the behavior of all the users Ux of one country that connect to the network secure system S, the key value k is initialized with the value country co1,
- to evaluate the behavior of all the users Ux of a tenant that connect to the network secure system S, the key value k is initialized with the value tenant te1,
- to evaluate the behavior of all the users Ux of a service that connect to the network secure system S, the key value k is initialized with the value service se1,
- to evaluate the behavior of only one user Ux, the key value k is initialized with the value user us1.

In a non-limitative embodiment, a plurality of key values k is predetermined before the execution of the detection method 2. Hence, in a non-limitative example, one can chose to evaluate the behavior of all the users Ux of a tenant and the behavior of all the users Ux of a service at the same time.

When the at least one key value k has been determined, the detection method 2 can be executed.

As illustrated in figure 5, the detection method 2 comprises the following steps.

In step ST21 illustrated F21(M1.1, k, Db), at least one primary model M1.1 related to the predetermined key value k is identified within a database Db. Said database Db has been abovementioned and is the one indexed by the different key values k and where the primary models M1.1 that have been trained are stored. Hence, one recover the primary model M1.1 corresponding to the key value k that has been chosen beforehand.

Hence, in non-limitative examples:
- if the key value k is the country co1, the corresponding primary model M1.1 stored in the database Db is recovered,
- if the key value k is the tenant te1, the corresponding primary model M1.1 stored in the database Db is recovered,
- if the key value k is the service se1, the corresponding primary model M1.1 stored in the database Db is recovered,
- if the key value k is the user us1, the corresponding primary model M1.1 stored in the database Db is recovered.

It is to be noted that when a plurality of key values k is predetermined, a plurality of primary models M1.1 are identified within the database Db, each of the primary model M1.1 corresponding to a different predetermined key value k. The plurality of primary models M1.1 is therefore recovered from the database Db and used in the following step.

In step ST22 illustrated F22(IN2, M1.1, SI2(U2)), a register stream of data IN2 is applied as input to said at least one primary model M1.1 so that it outputs a primary score SI2 for each data U2 of said register stream of data IN2.

The register stream of data IN2 comprises the authentications online of the users Ux related to the at least predetermined key value k. Hence, the data U2 are said authentications online of the users Ux.

Hence, in a non-limitative example, if the key value k is a service se1, such as the research and development service, the register stream of data IN2 comprises all the authentications online of the users Ux of said research and development service.

In step ST23 illustrated F23(IN2, M1.2, Sg2(U2)), said register stream of data IN2 is applied as input to the secondary model M1.2 so that it outputs a secondary score Sg2 for each data U2 of said register stream of data IN2.

In step ST24 illustrated F24(f(Ux), WI, SI2, Wg, Sg2, Sr2), an aggregation function f(Ux) is computed by combining primary weights WI with the primary score SI2 and secondary weights Wg with the secondary score Sg2 so that it outputs a register score Sr2 that is a prediction of said condition C. The aggregation function f(Ux)is illustrated in figure 6.

It is to be noted that the primary weights WI and the secondary weights Wg used are the one found at the end of training of the at least primary model M1.1.

In a non-limitative embodiment, the aggregation function f(Ux) is a supervised model M1.3 with labels being the primary scores SI2 and the secondary scores Sg2.

In a non-limitative embodiment, the supervised model M1.3 is a random forest regression model. The random forest regression model is powerful and accurate. It performs very well on problems including features with non-linear relationships.

In a non-limitative embodiment, the random forest regression model comprises the following parameters:
- a number of trees : 150,
- a feature sampling strategy: square root,
- a maximum depth of tree : 10,
- a minimum samples per leaf :5

In a non-limitative embodiment, in step ST25 illustrated F25(Sr2, th2, C), if the register score Sr2 is above a secondary threshold th2, one deduces that the condition C is positive, that is to say there is an abnormal behavior in the non-limitative given embodiment.

In the non-limitative examples given, one deduces that the authentication or the activities are abnormal.

It is to be noted that the secondary threshold th2 is initialized with an initialization value based on an empiric experience, and then it is tuned according to the feedback of the detection.

Hence, thanks to the detection method 2 using the assembling model M1 that has been trained, one can detect if an authentication of a user Ux is normal or abnormal compared to a global population of users Ux and taking into account his own particularities of authentications.

If it is normal, one lets the user Ux enters the network secure system S or perform his activities inside the network secure system S. If it is abnormal, one denies the access to the network secure system S or denies his activities inside the network secure system S.

It is to be noted that after executing the detection method 2, one observes that there are still too many false alarms such as false/positive detections and/or false negative detections, one can retrained the assembling model M1 with other adjusted values for the primary weights WI and for the secondary weights Wg until a satisfied assembling model M1 is found.

It is to be understood that the present invention is not limited to the aforementioned embodiments and variations and modifications may be made without departing from the scope of the invention. All statements herein reciting principles, aspects, and embodiments of the invention, as well as specific examples thereof, are intended to encompass equivalents thereof. In the respect, the following remarks are made. In another non-limitative embodiment, the at least one primary model M1.1 and the secondary model M1.2 are supervised models. In another non-limitative embodiment, for the second feature vf, one can look for how many times a user Ux logins at a same day time, for example a certain hour during the time window t1, or how many times a user Ux logins using different devices during the time window t1. In another non-limitative embodiment, the secondary model M1.2 is a dbscan model.

Hence, some embodiments of the invention may comprise one or a plurality of the following advantages:
- it allows comparing a user's activity versus activities of a whole set of users Ux, and to take also into account possible particularities of the user Ux that are not in line with the behaviors of the whole set of users Ux,
- by combining at least one primary model M1.1 and a secondary model M1.2, it improves the security level during an authentication flow regarding a user's behavior,
- it allows obtaining a best score compared to the method of the prior art when evaluating a user's behavior compared to a global population of users Ux and when evaluating a new user's behavior,
- it allows a more accurate result on the prediction of the condition C as the result is closer to individual behaviors,
- it decreases the errors regarding false/positive detection and false/negative detection, wherein a false/positive detection is when one classifies a behavior as abnormal although it is normal, and wherein a false/negative detection is when one classifies a behavior as normal although it is abnormal.

## Claims

1. A training method (1) for training a model (M1) to detect a condition (C), wherein said model (M1) is an assembling model that is composed of at least one primary model (M1.1) and of a secondary model (M1.2), said training method (1) comprising:
- training the primary model (M1.1) with a primary training dataset (D1) based on a dataset of data (IN1) partitioned by a key value (k), said primary training dataset (D1) comprising input values (i1) so that it outputs a primary score (SI1) for each data (Ui) within the partitioned dataset of data (IN1),
- training the secondary model (M1.2) with a secondary training dataset (D2) based on a dataset of data (IN1), said secondary training dataset (D2) comprising at least one feature (vf) representing the variability of said input values (i1) within a time window (t1) so that it outputs a secondary score (Sg1) for each data (Ui) within the dataset of data (IN1),
- computing an aggregation function (f(Ux)) by combining said primary weights (WI) with the primary scores (SI1) and said secondary weights (Wg) with the secondary scores (Sg1) so that it outputs a register score (Sr1) that is a prediction of said condition (C),
- tuning the assembling model (M1) with said aggregation function (f(Ux)) based on adjusted primary weights (WI) and on adjusted secondary weights (Wg) until the register score (Sr1) is below a primary threshold (th1).

2. A training method (1) according to claim 1, wherein said training method (1) further comprises initializing said primary weights (WI) and said secondary weights (Wg) according to a number of entries (N) of said dataset of data (IN1).

3. A training method (1) according to any of the preceding claims, wherein said primary model (M1.1) and said secondary model (M1.2) are unsupervised models and wherein said at least primary model (M1.1) is a KDE model and said secondary model (M1.2) is an isolation forest model or a K-means model.

4. A training method (1) according to any of the preceding claims, wherein said condition (C) is an abnormal behavior of a user (Ux) within a secure system (S) such as a network secure system or a building secure system.

5. A training method (1) according to the preceding claim, wherein the abnormal behavior relates to:
- an authentication of said user (Ux) to enter said secure system (S), or
- activities of said user (Ux) inside the secure system (S) after authentication of said user (Ux).

6. A training method (1) according to any of the preceding claims 4 or 5, wherein said key value (k) is selected within the following set of data:
- a country (co1),
- a tenant (te1),
- a service (se1),
- a user (us1).

7. A training method (1) according to any of the preceding claims 4 to 6, wherein the input values (i1) are selected within the following set of data:
- IP address (ip1) of said user (Ux),
- geolocalisation (ge1) of said IP address (ip1),
- authentication's day (da1),
- authentication's day time (dt1),
- application (app1) aimed by the authentication,
- device (de1) used for the authentication.

8. A training method (1) according to any of the preceding claims, wherein said at least one feature (vf) is selected within the following set of data:
- the number of times (nb1) an input value (i1) appears during said time window (t1),
- the diversity of values (dv1) for each input value (i1) during said time window (t1).

9. A training method (1) according to any of the preceding claims, wherein said assembling model (M1) comprises a plurality of primary models (M1.1), each of said primary model (M1.1) being trained with a primary training data set (D1) based on a dataset of data (IN1) partitioned by key values (k) that are different from one primary model (M1.1) to another one primary model (M1.1).

10. A training method (1) according to any of the preceding claims, wherein said training method (1) further comprises:
- registering in a database (Db) a mapping between the at least one trained primary model (M1.1) found and the corresponding key value (k).

11. A detection method (2) for detecting a condition (C) using a model (M1), wherein said model is an assembling model (M1) that is composed of at least one primary model (M1.1) and a secondary model (M1.2), wherein said detection method (2) comprising:
- identifying within a database (Db) at least one trained primary model (M1.1) related to at least one predetermined key value (k),
- applying a register stream of data (IN2) as input to said at least one identified primary model (M1.1) so that it outputs a primary score (SI2) for each data of said register stream of data (IN2),
- applying said register stream of data (IN2) as input to the secondary model (M1.2) so that it outputs a secondary score (Sg2) for each data of said register stream of data (IN2),
- computing an aggregation function (f(Ux)) by combining primary weights (WI) with the primary score (SI2) and secondary weights (Wg) with the secondary score (Sg2) so that it outputs a register score (Sr2) that is a prediction of said condition (C).

12. A detection method (2) according to the preceding claim, wherein said detection method (2) further comprises deducing that the condition (C) is positive if the register score (Sr2) is above a secondary threshold (th2).

13. A detection method (2) according to any of the preceding claims 11 or 12, wherein said condition (C) is an abnormal behavior of a user (Ux) within a secure system (S).

14. A detection method (2) according to the preceding claim, wherein the abnormal behavior (C) relates to:
- an authentication of said user (Ux) to enter said secure system (S), or
- activities inside the secure system (S) after authentication of said user (Ux).

15. A detection method (1) according to any of the preceding claims 11 to 14, wherein the aggregation function (f(Ux)) is a supervised model (M1.3) with labels (Lb) being the primary scores (SI2) and the secondary scores (Sg2).
